Europäisches Patentamt

European Patent Office

Office européen des brevets

(19)

(11) Numéro de publication : **0 607 063 A1**

## (12) DEMANDE DE BREVET EUROPEEN

(21) Numéro de dépôt : **94400013.2**

(22) Date de dépôt : **04.01.94**

(51) Int. Cl.⁵ : **H04L 27/22**

(30) Priorité : **06.01.93 FR 9300051**

(43) Date de publication de la demande :
**20.07.94 Bulletin 94/29**

(84) Etats contractants désignés :
**DE FR GB IT**

(71) Demandeur : **ALCATEL TELSPACE**
**5, rue Noel Pons**
**F-92734 Nanterre Cédex (FR)**

(72) Inventeur : **Kimiavi, Mani**
**72, Avenue Simon Bolivar**
**F-75019 Paris (FR)**

(74) Mandataire : **Pothet, Jean Rémy Emile Ludovic
et al**
**c/o SOSPI**
**14-16 rue de la Baume**
**F-75008 Paris (FR)**

(54) **Dispositif de correction d'erreurs de phase, pour signaux modulés en sant de phase et transmis en paquets.**

(57)   L'application concerne un dispositif de correction, en bande de base, d'erreurs de phase, destiné à être intégré dans un récepteur de signaux numériques modulés en sauts de phase, et transmis en paquets. Ledit dispositif est du type comprenant un module de correction (33) assurant la rotation de la constellation reçu en fonction d'une information ($\theta_C$) représentative du décalage angulaire de ladite constellation.

Selon l'invention, pour chaque paquet reçu, l'information de décalage angulaire ($\theta_C$) pilotant le module de correction (33) est fournie d'abord pendant une durée prédéterminée, par un premier circuit de calcul (34) mettant en oeuvre une multiplication de fréquence (première information $\theta_{C,1}$), puis, après un instant de commutation correspondant à la fin de la durée prédéterminée, par un second circuit de calcul constitué d'une boucle à verrouillage de phase (seconde information $\theta_{C,2}$), le second circuit de calcul étant initialisé avec la première information ($\theta_{C,1}$) de décalage angulaire au moment de l'instant de commutation.

Fig. 3

EP 0 607 063 A1

Le domaine de l'invention est celui des signaux numériques à modulation de phase à au moins deux états de phase.

Plus précisément, l'invention concerne un dispositif de calage de phase destiné à être intégré dans l'étage de démodulation d'un récepteur d'un tel signal numérique lorsque ce signal numérique est transmis par paquets successifs.

Une application privilégiée du dispositif de l'invention est le modem AMRT (Accès Multiple par Répartition dans le Temps) mis en oeuvre, par exemple, dans un système de répéteurs satellites.

Dans un tel système, les données sont transmises par trames, chaque trame étant constituée de plusieurs paquets. Le signal correspondant est modulé en phase et chaque paquet commence par un préambule de récupération de porteuse et de rythme comprenant un nombre prédéterminé de symboles. Ainsi, pour chaque paquet reçu, le modem AMRT doit se caler en phase avant la fin du préambule prévu à cet effet, puis conserver ce calage de phase jusqu'au paquet suivant.

Le principe général de démodulation d'un signal numérique à modulation de phase est le suivant : le signal reçu, après passage dans un filtre passe-bande en fréquence intermédiaire, est décomposé en deux composantes en quadrature de phase par multiplication respectivement par le signal issu d'un oscillateur local et par un signal en quadrature de phase avec le signal issu de l'oscillateur local. Chacune de ces deux composantes analogiques est filtrée puis convertie en composante numérique grâce à un convertisseur analogique/numérique.

Ainsi, en réception, on dispose d'une succession de couples de composantes numériques en quadrature. Il s'agit, à partir de ces couples successifs, de retrouver les symboles émis.

On raisonne généralement dans le plan de phase, les états de phase théoriques étant représentés dans un premier repère et les états de phase trouvés (correspondant aux couples successifs de composantes en quadrature) étant représentés dans un second repère, les deux repères étant de même origine.

Dans chaque repère, un état de phase est représenté par un point dont les coordonnées cartésiennes sont d'une part la composante en phase et d'autre part la composante en quadrature de phase.

Dans le cas général d'une modulation à $2^n$ états de phase, les $2^n$ points correspondant aux $2^n$ états de phase théoriques sont situés, dans le premier repère, sur un même cercle centré sur l'origine du premier repère. En effet, le signal n'est pas modulé en amplitude et seule la phase est variable.

Ces $2^n$ points constituent la constellation des états de phase théoriques de la modulation à $2^n$ états de phase. Les $2^n$ valeurs de phase associées aux différents points de la constellation sont :

$$(2k + 1)(\pi/2^n), \text{ avec } k \, \varepsilon \, [0, 2^n - 1].$$

A chaque état de phase est associé un symbole de n éléments binaires.

Par exemple, la constellation des états de phase d'une modulation de phase à 4 états de phase comprend 4 points, de phases respectives $\pi/4$, $3\pi/4$, $5\pi/4$ et $7\pi/4$.

Par ailleurs, en prenant en réception un nombre suffisant de couples successifs de composantes en quadrature, on obtient également $2^n$ points constituant la constellation des états de phase du signal reçu, deux points successifs de cette constellation étant séparés d'une même distance angulaire que deux points de la constellation des états de phase théoriques.

Mais, le premier et le second repère, auxquels sont associés respectivement la constellation des états de phase théoriques et la constellation des états de phase du signal reçu, s'ils sont de même origine, peuvent par contre tourner l'un par rapport à l'autre puisque la référence de phase (à savoir l'axe des abscisses) de chacun des deux repères est choisie arbitrairement.

L'invention a précisément pour objet un dispositif permettant l'obtention de l'égalité entre les deux repères. Ceci revient à choisir une même référence de phase pour les deux repères, et obtenir ainsi la superposition des deux constellations.

Après ce calage de phase, un module de décision permet d'associer un symbole, parmi les $2^n$ symboles possibles, à chaque couple de composantes.

Toutefois, il subsiste une indétermination. En effet, les deux constellations ayant tourné l'une par rapport à l'autre avant d'être superposées, il est impossible de déterminer directement, si chaque symbole associé à un couple de composantes par le module de décision est effectivement le bon symbole.

La levée de cette indétermination est effectuée dans un dispositif de levée d'ambiguïté, situé en aval du module de décision.

Il apparaît donc qu'un dispositif de calage de phase destiné à être intégré dans l'étage de démodulation d'un récepteur d'un signal numérique à modulation de phase à $2^n$ états de phase, avec $n \geqq 1$, doit comprendre un module de correction assurant la rotation de la constellation des états de phase du signal reçu par rapport à la constellation des états de phase théoriques, afin d'éliminer un éventuel décalage de phase. Cette rotation s'effectue en fonction d'une information représentative de ce décalage de phase.

Une première solution connue de calage de phase consiste à calculer l'information représentative du décalage de phase entre les deux constellations (reçue et théorique) à l'aide d'un circuit constitué d'une boucle à verrouillage de phase.

Cette première solution présente une très bonne immunité au bruit.

Toutefois, elle présente l'inconvénient majeur de ne pas permettre un calage de phase rapide. En fait, cette première solution s'applique exclusivement à un signal à débit continu. En effet, la réception et la démodulation d'un tel signal ne nécessite qu'un seul calage de phase, en début de réception, ce calage de phase pouvant être effectué sans aucune contrainte de rapidité.

Lors de la suite de la réception, la caractéristique de très bonne immunité au bruit de la boucle à verrouillage de phase permet de maintenir ce calage avec une très bonne précision.

Or l'invention concerne un calage de phase d'un signal numérique transmis par paquets successifs. En d'autres termes, dans le cadre de l'invention, chaque paquet doit être calé en phase avant l'écoulement d'une faible durée prédéterminée. Cette faible durée correspond, par exemple, à un préambule comprenant un nombre limité de symboles. Le calage de début de paquet doit ensuite être maintenu jusqu'au paquet suivant.

Il est donc impossible, pour des raisons de rapidité, de mettre en oeuvre la première solution basée sur l'utilisation d'une boucle à verrouillage de phase pour résoudre le problème posé par le calage de phase d'un signal numérique transmis par paquets successifs.

Une seconde solution connue, permettant de résoudre ce problème de rapidité de calage, consiste à utiliser un circuit de calcul mettant en oeuvre l'algorithme de Viterbi, de façon à fournir rapidement au module de correction une information représentative du décalage de phase.

En effet, un tel circuit, contrairement au circuit constitué d'une boucle à verrouillage de phase, permet un calage de phase rapide en début de chaque paquet.

Néanmoins, cette seconde solution présente également un inconvénient majeur, à savoir une mauvaise immunité au bruit se traduisant par un taux d'erreur binaire (TEB) élevé. En d'autres termes, le calage est obtenu rapidement, mais au détriment d'une bonne précision. Ce manque de précision, caractéristique de l'algorithme de Viterbi, se retrouve sur toute la durée du paquet.

L'invention a notamment pour objectif de pallier ces différents inconvénients de l'état de la technique.

Plus précisément, un objectif de l'invention est de fournir un dispositif de calage de phase destiné à être intégré dans l'étage de démodulation d'un récepteur d'un signal numérique à modulation de phase à au moins deux états de phase, ce signal étant transmis par paquets successifs.

Un autre objectif de l'invention est de fournir un tel dispositif qui permette un calage de phase rapide, la durée de ce calage de phase devant être inférieure à une durée prédéterminée correspondant, par exemple, à la durée du préambule de chaque paquet.

L'invention a également pour objectif de fournir un tel dispositif qui permette de maintenir avec une bonne immunité au bruit (et donc un TEB faible) et pendant toute la durée restante du paquet, ce calage de phase rapide effectué en début de paquet.

En d'autres termes, un objectif de l'invention est de fournir un tel dispositif qui permette un calage de phase rapide en début de paquet, tout en permettant de conserver ce calage avec une bonne immunité au bruit (et donc un TEB faible) jusqu'à la fin du paquet.

Ces objectifs, ainsi que d'autres qui apparaîtront par la suite, sont atteints selon l'invention à l'aide d'un dispositif de calage de phase destiné à être intégré dans l'étage de démodulation d'un récepteur d'un signal numérique à modulation de phase à au moins deux états de phase, ledit signal étant transmis par paquets successifs, ledit dispositif étant du type comprenant un module de correction assurant la rotation de la constellation des états de phase du signal reçu en fonction d'une information représentative du décalage angulaire de ladite constellation, ledit décalage angulaire correspondant à un décalage de phase, ledit dispositif comprenant deux circuits distincts de calcul de ladite information représentative du décalage angulaire :

- un premier circuit de calcul mettant en oeuvre l'algorithme de Viterbi de façon à fournir une première information de décalage angulaire à partir d'une séquence constituée d'un nombre prédéterminé N de symboles du signal reçu,
- un second circuit de calcul constitué d'une boucle à verrouillage de phase fournissant une seconde information de décalage angulaire à partir du signal reçu en continu,

et pour chaque paquet reçu, ladite information représentative du décalage angulaire de la constellation des états de phase est fournie au module de correction par une sortie d'un moyen de commutation recevant en entrée :

- d'une part ladite première information de décalage angulaire provenant du premier circuit de calcul,
- d'autre part ladite seconde information de décalage angulaire provenant du second circuit de calcul,

ledit moyen de commutation étant commandé par un circuit de temporisation de façon que ladite sortie du moyen de commutation fournisse d'abord, pendant une durée prédéterminée, ladite première information, puis, à un instant de commutation correspondant à la fin de ladite durée prédéterminée, ladite seconde information,

ledit second circuit de calcul étant initialisé avec ladite première information de décalage angulaire au moment dudit instant de commutation..

Ainsi, le calage de phase en début de paquet est rapide. En effet, l'information représentative du décalage angulaire de la constellation des états de phase du signal reçu est d'abord fournie par le premier circuit de calcul mettant en oeuvre l'algorithme de Viterbi. Cet algorithme permet d'estimer correctement le décalage de phase à partir seulement de quelques symboles reçus, d'où la rapidité de ce premier circuit de calcul.

Puis, après que ce calage de phase rapide a été effectué, il y a commutation entre le circuit précédent (mettant en oeuvre l'algorithme de Viterbi) et le second circuit (constitué d'une boucle à verrouillage de phase), avec initialisation du second circuit de calcul avec l'information de décalage angulaire calculée par le premier circuit. En d'autres termes, après cet instant de commutation, l'information représentative du décalage angulaire est fournie, jusqu'à la fin du paquet, par le second circuit de calcul. Ce second circuit de calcul présente une bonne immunité au bruit et convient parfaitement pour fournir une information sur de faibles valeurs de décalage angulaire.

En résumé, le dispositif selon l'invention permet un calage de phase :
- rapide, grâce à un premier circuit de calcul mettant en oeuvre une détermination du décalage angulaire basée uniquement sur les premiers symboles du paquet ; et
- peu sensible au bruit, grâce à l'utilisation d'un second circuit constitué d'une boucle à verrouillage de phase initialisée avec la valeur de décalage angulaire fournie par le premier circuit et mettant en oeuvre une détermination plus fine et non bruitée du décalage angulaire basée sur la succession des autres symboles du paquet.

Préférentiellement, ladite boucle à verrouillage de phase du second circuit de calcul comprend :
- un détecteur d'erreur de phase ;
- un filtre passe-bas du second ordre ;
- un accumulateur de phase.

Avantageusement, ladite démodulation de phase du signal reçu est une démodulation cohérente.

Dans un mode de réalisation préférentiel de l'invention, ladite démodulation de phase est une démodulation à quatre états de phase.

Dans un mode de réalisation particulier de l'invention, lesdits paquets successifs sont regroupés en trames AMRT (Accès Multiple par Répartition dans le Temps), chacun desdits paquets commençant par un préambule constitué d'une séquence comprenant un nombre prédéterminé M de symboles, ladite durée prédéterminée précédant l'instant de commutation étant inférieure à la durée de réception dudit préambule.

De cette façon, le dispositif selon l'invention peut être mis en oeuvre dans un modem AMRT utilisé notamment dans les systèmes de répéteurs satellites.

Avantageusement, ledit nombre prédéterminé N de symboles du signal reçu utilisés lors de l'exécution de l'algorithme de Viterbi est N = 17 symboles.

Ce nombre correspond à un bon compromis rapidité/performance. En effet, la précision de l'information de décalage angulaire est proportionnelle au nombre de symboles utilisés lors de l'exécution de l'algorithme de Viterbi, mais le temps d'exécution de cet algorithme (que l'on désire minimiser) est également proportionnel à ce nombre de symboles.

De façon avantageuse, les différents jeux de valeurs quantifiées utilisés par le module de correction pour effectuer ladite rotation de la constellation des états de phase sont stockés dans une mémoire morte externe audit module de corrections, chacun desdits jeux de valeurs quantifiées correspondant à une valeur distincte de décalage angulaire.

De cette façon, il est possible de disposer d'un nombre élevé de jeux de valeurs distincts et, par conséquent, le calage peut être effectué avec plus de précision.

Dans un mode de réalisation avantageux de l'invention, ladite initialisation du second circuit de calcul au moment dudit instant de commutation consiste à injecter ladite première information de décalage angulaire dans les éléments binaires de poids fort de l'accumulateur de phase du second circuit de calcul..

L'invention concerne également un récepteur d'un signal numérique à modulation de phase à au moins deux états de phase, ledit signal étant transmis par paquets successifs, ledit récepteur étant du type comprenant un étage de démodulation composé de :
- un filtre passe-bande en fréquence intermédiaire ;
- un oscillateur local ;
- un module de multiplication du signal reçu filtré, d'une part par le signal fourni par ledit oscillateur local, et d'autre part par un signal en quadrature de phase avec ledit signal fourni par l'oscillateur local, les deux signaux résultant desdites multiplications correspondant aux deux composantes en quadrature de phase l'une par rapport à l'autre du signal reçu ;
- deux filtres passe-bas anti-repliement ;
- deux convertisseurs analogique/numérique permettant chacun de convertir en numérique une desdites composantes filtrées en quadrature ;
- deux filtres passe-bas en racine de Nyquist ;
- un module de récupération de rythme à partir desdites composantes filtrées en quadrature, la sortie dudit module de récupération de rythme commandant lesdits convertisseurs analogique/numérique;
- un dispositif de calage de phase selon l'invention assurant la rotation de la constellation des états de phase correspondant aux différents couples de composantes numériques filtrées en quadrature ;
- un module de décision permettant d'associer un symbole à chaque couple de composantes en quadrature calées en phase ;
- un dispositif de levée d'ambiguïté (231) permettant de remplacer le symbole issu de la décision prise par le module de décision (227), par un symbole correct.

D'autres caractéristiques et avantages de l'invention apparaîtront à la lecture de la description suivante d'un mode de réalisation préférentiel de l'invention, donné à titre d'exemple indicatif et non limitatif, et des dessins annexés, dans lesquels :

- la figure 1A présente la constellation des états de phase d'une modulation de phase à 4 états de phase (MDP4) ;
- la figure 1B présente le décalage angulaire entre la constellation des états de phase du signal reçu et la constellation des états de phase théoriques présentée sur la figure 1A ;
- la figure 2 présente un schéma simplifié d'un étage de démodulation d'un récepteur d'un signal numérique comprenant un dispositif de calage de phase selon l'invention ;
- la figure 3 présente un schéma simplifié partiel d'un dispositif de calage selon l'invention lorsque l'information de décalage angulaire est fournie par un premier circuit de calcul mettant en oeuvre l'algorithme de Viterbi ;
- la figure 4 présente un schéma simplifié partiel d'un dispositif de calage selon l'invention lorsque l'information de décalage angulaire est fournie par un second circuit de calcul constitué d'une boucle à verrouillage de phase ;
- la figure 5 présente un schéma simplifié d'un filtre passe-bas du second ordre mis en oeuvre dans la boucle à verrouillage de phase présentée sur la figure 4 ;
- la figure 6 présente un schéma simplifié du circuit de commutation entre le premier circuit de calcul présenté sur la figure 3 et le second circuit de calcul présenté sur la figure 4.

L'invention concerne donc un dispositif de calage de phase destiné à être intégré dans l'étage de démodulation d'un récepteur d'un signal numérique à modulation de phase à au moins deux états de phase, ce signal étant transmis par paquets successifs.

Le dispositif décrit ci-dessous est destiné à être mis en oeuvre dans un modem AMRT (Accès Multiple par Répartition dans le Temps) utilisé par exemple dans un répéteur satellite, la modulation utilisée étant une modulation MDP4 (Modulation De Phase à 4 états de phase).

Il est clair toutefois que le dispositif selon l'invention peut être aisément adapté à de nombreuses autres applications, sans sortir du cadre de l'invention.

Dans un système AMRT, les données numériques sont transmises en trames, chaque trame étant constituée de plusieurs paquets successifs. Chaque paquet est constitué d'une séquence d'éléments binaires que le récepteur doit retrouver. A l'émission, le signal est modulé en phase, chaque état de phase possible correspondant à un symbole distinct d'au moins un élément binaire.

Ainsi, dans le cas d'une modulation de phase à 4 états de phase (MDP4), chaque état de phase ($\pi/4$, $3\pi/4$, $5\pi/4$, $7\pi/4$) correspond à un symbole de deux éléments binaires (respectivement 00, 01, 11, 10).

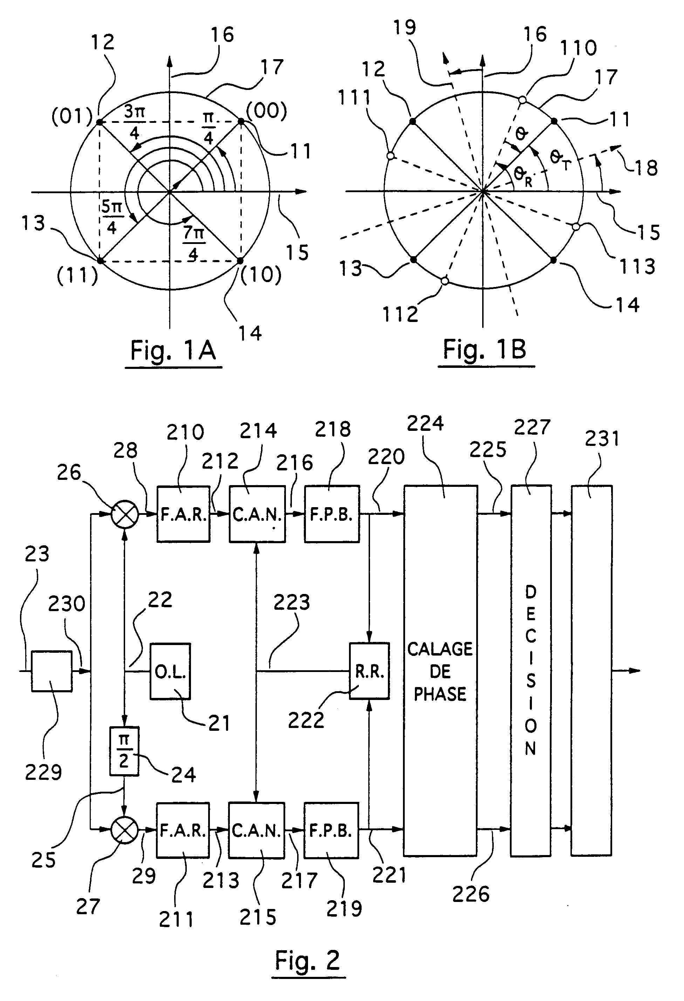

La figure 1A présente la constellation des états de phase théoriques de cette modulation MDP4.

Chaque point 11 à 14 de cette constellation est situé à l'extrémité d'un vecteur dont le module et la phase correspondent respectivement à l'amplitude et à la phase du signal modulé.

La composante de phase nulle de ce vecteur est portée en abscisse 15 et sa composante en quadrature de phase est portée en ordonnée 16.

Le signal étant modulé uniquement en phase, le module du vecteur est constant. De plus, le repère étant orthonormé, l'extrémité du vecteur correspondant au signal se déplace sur un cercle 17 lorsque la phase du signal modulé change de valeur. Par conséquent, les quatres points 11 à 14 de la constellation sont situés sur le cercle 17.

En réception, le signal reçu doit être démodulé afin de retrouver la séquence d'éléments binaires de chaque paquet. Dans l'exemple présenté, la démodulation est cohérente.

La figure 2 présente un schéma simplifié d'un étage de démodulation d'un récepteur d'un signal numérique modulé en phase (par exemple selon une modulation correspondant à la constellation présentée sur la figure 1A).

Cet étage de démodulation comprend :
- un filtre passe-bande 229 en fréquence intermédiaire permettant de filtrer le signal reçu 23 ;
- un oscillateur local 21 générant un signal 22 de même fréquence que la fréquence centrale du signal reçu 23 ;
- un déphaseur 24 de $\pi/2$ permettant d'obtenir un signal 25 en quadrature de phase avec le signal 22 généré par l'oscillateur local 21 ;
- deux multiplicateurs 26, 27 permettant de multiplier le signal reçu filtré 230 d'une part par le signal 22 généré par l'oscillateur local 21 et d'autre part par le signal 25 en quadrature de phase avec le signal 22 généré par l'oscillateur local 21, les signaux 28, 29 résultant de ces deux multiplications étant égaux aux deux composantes en quadrature de phase l'une par rapport à l'autre du signal reçu 23 ;
- deux filtres passe-bas anti-repliement 210, 211 ;
- deux convertisseurs analogique / numérique 214, 215 permettant d'obtenir deux composantes numériques 216, 217 en quadrature à partir des deux composantes filtrées 212, 213 ;
- deux filtres passe-bas 218, 219 en racine de Nyquist ;
- un module de récupération de rythme 222 à partir des deux composantes numériques filtrées 220, 221, la sortie 223 de ce module 222 commandant les deux convertisseurs analogique / numérique 214, 215 ;

- un dispositif de calage de phase 224 selon l'invention ;
- un module de décision 227 permettant d'associer un symbole à chaque couple de composantes numériques 225, 226 calées en phase;
- un dispositif de levée d'ambiguïté 231 permettant de lever l'indétermination résultant de la décision prise par le module de décision 227, et de déterminer le symbole correct.

Ainsi, pour chaque symbole à déterminer, on dispose, en sortie des deux filtres passe-bas 218, 219, de deux composantes numériques 220, 221 filtrées et en quadrature de phase, ces composantes étant obtenues à partir du signal reçu 23.

Comme présenté sur la figure 1B, pour chacun des différents symboles successifs à déterminer, on reporte les composantes de phase nulle 220 et en quadrature de phase 221 respectivement sur l'axe des abscisses 18 et sur l'axe des ordonnées 19 d'un repère orthonormé.

Dans le cas de la modulation MDP4, chaque couple de composantes correspond à l'un des quatre points 110 à 113 constituant la constellation des états de phase du signal reçu, ces quatre points 110 à 113 étant situé sur le cercle 17 servant également de support à la constellation des états de phase théoriques (telle que présentée sur la figure 1A).

Le module de décision 227 doit associer un des symboles possibles (quatre dans le cas de la modulation MDP4) à chaque couple de composantes en quadrature du signal reçu.

Ceci n'est possible que si la constellation des états de phase théoriques (points référencés 11 à 14) coïncide avec la constellation des états de phase du signal reçu (points référencés 110 à 113), c'est-à-dire si le signal reçu a été calé en phase.

Or, la référence de la phase (à savoir l'axe des abscisses sur lequel sont reportées les composantes de phase nulle) du premier repère associé au signal reçu (premier repère dont les axes sont référencés 18 et 19) est choisie arbitrairement. Par conséquent, cette référence de phase ne coïncide généralement pas avec la référence de phase du second repère dans lequel est représenté la constellation des états de phase théoriques (second repère dont les axes sont référencés 15 et 16).

Sur l'exemple présenté sur la figure 1B, il existe un décalage angulaire (ou de phase) $\theta = \theta_T - \theta_R$ entre le premier et le second repère, avec $\theta_T = \pi/4$ la phase du premier point 11 de la constellation des états de phase théoriques et $\theta_R$ la phase du premier point 110 de la constellation des états de phase du signal reçu, $\theta_T$ et $\theta_R$ étant mesurés par rapport à la référence de phase du premier repère (à savoir l'axe des abscisses 15 de ce repère).

Il est à noter que ce décalage est mesuré modulo $\pi/2$.

C'est précisément le rôle du dispositif selon l'invention que de supprimer ce décalage angulaire $\theta$ mod ($\pi/2$). En d'autres termes, le dispositif selon l'invention permet de prendre une même référence de phase pour les deux repères.

Ainsi, en calant en phase les deux repères, les points 110 à 113 de la constellation des états de phase du signal reçu coïncident avec les points 11 à 14 de la constellation des états de phase théoriques.

Le module de décision 227 permet d'associer un symbole à chaque couple de composantes en quadrature du signal reçu.

Néanmoins, il subsiste une indétermination dû au fait que le décalage de phase est mesuré modulo $\pi/2$. Par conséquent, le symbole associé à un couple de composantes par le module de décision n'est pas obligatoirement le bon.

Un dispositif de levée d'ambiguïté 231, situé en aval du module de décision, permet de lever cette indétermination.

Le calage de phase consiste à déterminer l'écart angulaire $\theta$ entre les deux constellations, puis à appliquer une rotation à la constellation des états de phase du signal reçu de façon que cet écart angulaire s'annule.

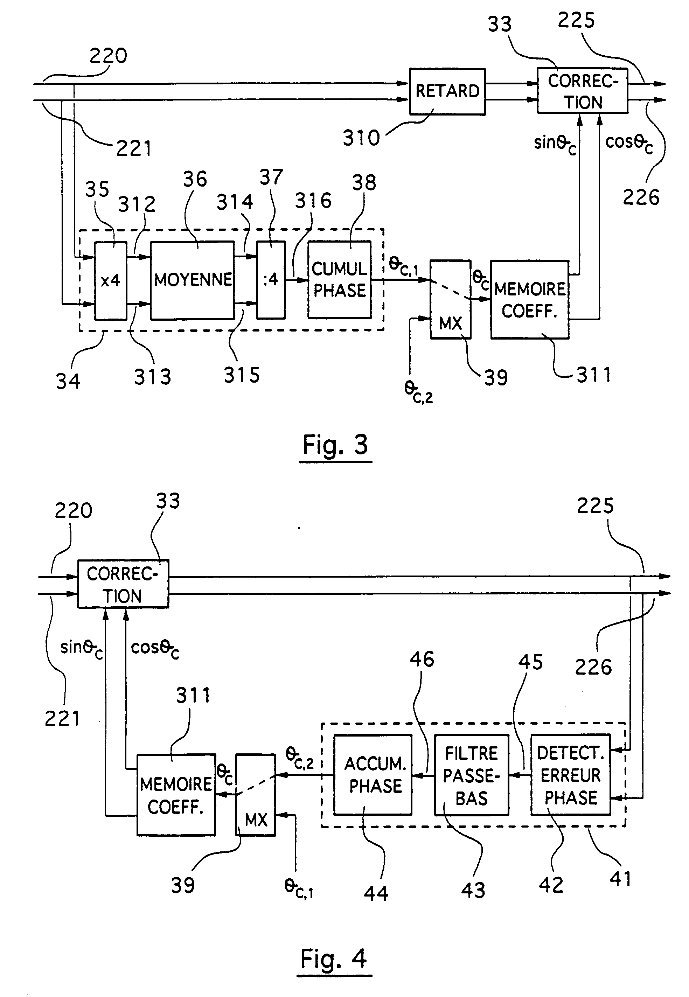

La figure 3 présente un schéma simplifié partiel d'un dispositif de calage de phase selon l'invention lorsque l'information de décalage angulaire est fournie par un premier circuit de calcul mettant en oeuvre l'algorithme de Viterbi.

Le dispositif de calage comprend un module de correction 33 assurant la rotation de la constellation des états de phase du signal reçu en fonction d'une information représentative du décalage angulaire $\theta$.

Dans le plan de phase, ceci est équivalent à une rotation du vecteur dont les composantes numériques en quadrature 220, 221 sont celles obtenues en sortie des filtres passe-bas 218-219 de l'étage de démodulation. Les composantes 225, 226 du vecteur résultant de cette rotation sont associées à un point coïncidant avec l'un des points 11 à 14 de la constellation des états de phase théoriques.

Le premier circuit de calcul 34 permet de calculer une première information $\theta_{c,1}$ de décalage angulaire, représentative du décalage angulaire $\theta$ réel, à partir d'une séquence constituée d'un nombre prédéterminé N de couples de composantes en quadrature 220, 221 du signal reçu.

Chacun de ces couples successifs correspond à un symbole à déterminer.

Le premier circuit de calcul 34 comprend :
- un module 35 de multiplication ;
- un module 36 de moyennage ;
- un module 37 de division ;
- un module 38 d'accumulation.

Le rôle de ces différents modules est expliqué en détail par la suite.

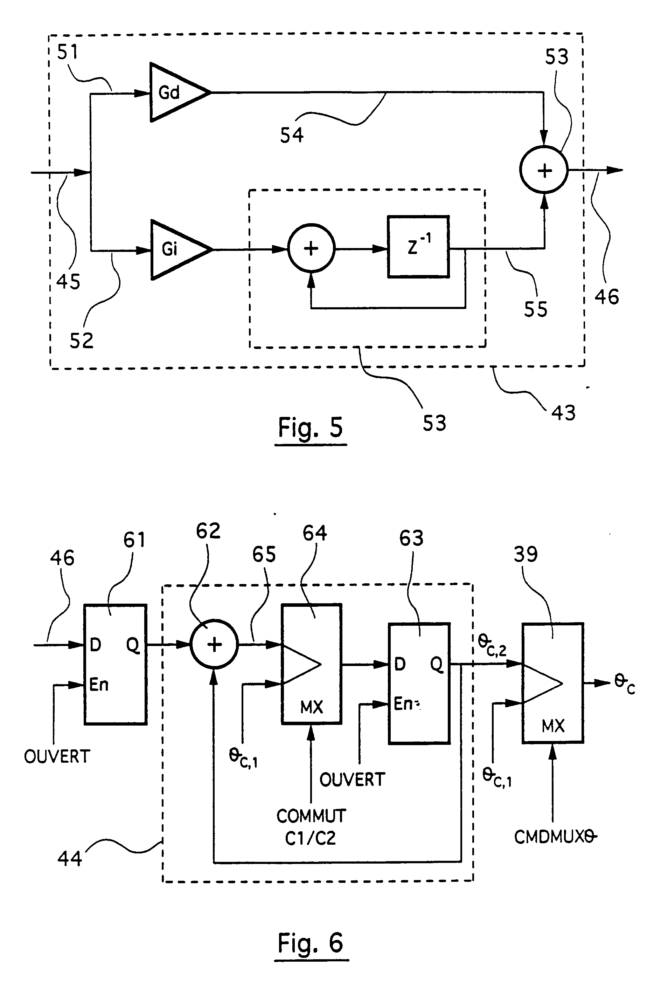

Selon l'invention, l'information de décalage angulaire $\theta_C$ réellement utilisée par le module de correction 33 peut être soit la première information $\theta_{C,1}$ calculée par le premier circuit de calcul 34, soit une seconde information $\theta_{C,2}$ calculée par un second circuit de calcul (comme présenté en relation avec la figure 4). Le circuit de commutation complet entre les premier et second circuits de calcul est expliqué en détail par la suite, en relation avec la figure 6.

Le circuit de commutation comprend notamment un multiplexeur 39 permettant de sélectionner, comme présenté sur la figure 3, une première information de décalage angulaire $\theta_{C,1}$, une seconde information de décalage angulaire $\theta_{C,2}$ pouvant être sélectionnée dans d'autres cas (cf figure 4).

Le module de correction 33 réalise une rotation d'un angle $\theta_C$ de chaque symbole reçu (et donc de la constellation des états de phase du signal reçu) afin d'éliminer la rotation de cette constellation et de ramener la constellation dans la position adéquate, pour la prise de décision.

Lorsque l'information de décalage angulaire $\theta_C$ est celle calculée par le premier circuit de calcul 34, comme présenté sur la figure 3, les composantes 220, 221 sont retardées par un module 310 d'une durée correspondant sensiblement à la moitié du temps de traitement du premier circuit de calcul 34. Ainsi, le module de correction 33 modifie le couple de composantes 220, 221 adéquat.

La rotation effectuée par le module de correction consiste simplement à multiplier les composantes 220, 221 par une matrice de rotation classique du type:

$$\begin{pmatrix} \cos \theta_C & -\sin \theta_C \\ \sin \theta_C & \cos \theta_C \end{pmatrix}$$

avec $\theta_C$ l'information de décalage angulaire calculée par l'un des deux circuits de calcul.

Dans le mode de réalisation présenté sur les figures 3 et 4, différents jeux de valeurs quantifiées des coefficients ($\cos \theta_C$ et $\sin \theta_C$) de la matrice de rotation sont stockés dans un module mémoire 311 externe au module de correction 33.

Ainsi, à partir de l'information $\theta_C$ de décalage angulaire calculée, ce module mémoire 311 (une mémoire morte PROM par exemple) fournit au module de correction 33 les coefficients de la matrice de correction à appliquer aux composantes 220, 221 du signal reçu.

Le premier circuit de calcul 34 présenté sur la figure 3 est un circuit classique de mise en oeuvre de l'algorithme de Viterbi.

Ainsi, dans le cas d'une modulation MDP4, le fonctionnement de ce premier circuit de calcul 34 est le suivant : dans le module 35 de multiplication, pour chaque symbole du signal reçu, les composantes 220, 221 qui représentent les coodonnées cartésiennes de ce symbole dans un repère du plan de phase sont converties en coordonnées polaires (module $\rho$ et angle $\alpha$). L'angle $\alpha$ est ensuite multiplié par 4, ce qui revient à supprimer la modulation de phase. Enfin, les coordonnées polaires ainsi obtenues sont converties en coordonnées cartésiennes 312, 313.

Le module 36 de moyennage effectue une moyenne, pour chaque coordonnée 312, 313, entre cette coordonnée et les coordonnées précédentes du même train.

Les coordonnées 314, 315 résultant de ces deux moyennages sont transmis au module 37 de division. Dans ce module 37 de division, les coordonnées moyennes 314, 315 sont à nouveau converties en coordonnées polaires. L'angle correspondant est divisé par 4, le résultat de cette division donnant une estimation du déphasage instantané 316 entre deux couples de coordonnées successifs.

Les déphasages instantanés 316 successifs sont cumulés dans le module 38 d'accumulation. Le résultat de ce cumul est une première information $\theta_{C,1}$ de décalage angulaire permettant au module de correction 33 de ramener la constellation dans la position adéquate pour la prise de décision.

Dans le mode de réalisation préférentiel de l'invention, on considère que la valeur de la première information $\theta_{C,1}$ de décalage angulaire est correcte, c'est-à-dire proche du décalage angulaire réel $\theta_C$, après que N = 17 symboles reçus ont été pris en compte.

Le choix de ce nombre N = 17 est issu d'un compromis rapidité / performance. En effet, ce premier circuit de calcul 34 est :

- d'une part, rapide puisqu'il fournit une information de décalage angulaire après traitement de seulement 17 symboles reçus ; et
- d'autre part performant puisque les calculs, et notamment les moyennages et le cumul, sont effectués sur un nombre suffisamment élevé de valeurs.

L'utilisation du premier circuit de calcul 34 afin de fournir une information de décalage angulaire convient donc parfaitement au système AMRT, et, plus généralement, à tous les systèmes dans lesquels le signal est transmis par paquets, chaque paquet devant être calé en phase.

Dans le système AMRT, chaque paquet commence par un préambule constitué d'une séquence comprenant un nombre prédéterminé M de symboles. Par conséquent, le nombre N de symboles du signal reçu pris en compte par le premier circuit de calcul 34 pour fournir la première information de décalage angulaire $\theta_{C,1}$ doit être inférieur au nombre M de symboles du préambule de chaque paquet.

La figure 4 présente un schéma simplifié partiel d'un dispositif de calage de phase selon l'invention lorsque l'information de décalage angulaire est fournie par un second circuit de calcul constitué d'une boucle à verrouillage de phase.

Le module de correction 33 déjà présenté en relation avec la figure 3, permet de multiplier le couple de composantes 220, 221 par une matrice de rotation dont les différents jeux de coefficients sont stockés dans le module mémoire 311.

Le multiplexeur 39 permet, comme présenté sur la figure 4, de sélectionner une seconde information de décalage angulaire $\theta_{C,2}$, la sélection de la première information de décalage angulaire correspondant au cas présenté sur la figure 3.

Le second circuit de calcul 41 permet de calculer une seconde information $\theta_{C,2}$ de décalage angulaire, représentative du décalage angulaire réel 0, à partir du signal reçu en continu, à savoir plus précisément à partir des couples successifs de composantes en quadrature 220, 221.

Ce second circuit de calcul 41 est une boucle d'asservissement de phase : le module de correction 33 est piloté par une information de décalage angulaire calculée à partir des composantes 225, 226 de sortie de ce module de correction 33.

Le second circuit de calcul 41 comprend :
- un module 42 de détection d'erreur de phase ;
- un filtre passe-bas 43 du second ordre ;
- un module 44 d'accumulation de phase.

Le module 42 permet d'estimer l'écart de phase instantanée entre deux couples de composantes 220, 221 successifs, et fournit une erreur de phase 45 (notée E), avec :

$$E = X \cdot Y \cdot (X + Y)(X - Y)$$

où (X, Y) est le couple de composantes 225, 226 en sortie du module de correction 33.

Cette erreur de phase 45 s'écrit également :

$$E = \rho^4 \sin 4\alpha$$

où $(\rho, \alpha)$ sont les coordonnées polaires correspondant aux coordonnées cartésiennes (X, Y).

Cette erreur 45 s'annule pour $\alpha \, \varepsilon \, \{\pi/4, 3\pi/4, 5\pi/4, 7\pi/4\}$, c'est-à-dire lorsque la rotation de la constellation est éliminée.

L'erreur de phase 45 est ensuite filtrée par un filtre 43 passe-bas du second ordre tel que présenté sur la figure 5. Ce filtre 43 comprend deux voies de traitement 51, 52.

La première voie 51 multiplie l'erreur de phase 45 par un coefficient Gd. La seconde voie 52 multiplie l'erreur de phase 45 par un coefficient Gi et cumule (53) le résultat des multiplications successives.

Les résultats 54, 55 des traitements de ces deux voies 51, 52 sont additionnés (53) afin de fournir l'erreur de phase filtrée 46.

Ce filtre 43 permet, en choisissant convenablement les gains Gi et Gd, de supprimer le bruit, et notamment la gigue de phase.

Les erreurs de phase filtrées 46 des symboles successifs reçus sont cumulées dans le module 44 d'accumulation de phase. Le résultat de ce cumul est la seconde information $\theta_{C,2}$ de décalage angulaire permettant au module de correction 33 de ramener la constellation dans la position adéquate pour la prise de décision.

Dans le dispositif selon l'invention, pour chaque paquet reçu à caler en phase, l'information de décalage angulaire pilotant le module de correction chargé d'éliminer la rotation de la constellation est fournie d'abord, pendant une durée prédéterminée, par le premier circuit de calcul mettant en oeuvre l'algorithme de Viterbi, puis, après un instant de commutation correspondant à la fin de la durée prédéterminée, par le second circuit de calcul constitué d'une boucle à verrouillage de phase. Le second circuit de calcul est initialisé, au moment de l'instant de commutation, avec l'information de décalage angulaire calculée par le premier circuit de calcul.

La figure 6 présente un schéma simplifié du circuit de commutation entre le premier circuit de calcul présenté sur la figure 3 et le second circuit de calcul présenté sur la figure 4.

L'information de décalage angulaire $\theta_C$ fournie au module de correction provient d'un premier multiplexeur 39 recevant en entrée :
- d'une part la première information de décalage angulaire $\theta_{C,1}$ provenant du premier circuit de calcul, et
- d'autre part la seconde information de décalage angulaire $\theta_{C,2}$ provenant du second circuit de calcul.

Le signal CMDMUX $\theta$ qui pilote ce premier multiplexeur 39 est tel que:
- si CMDMUX $\theta = 1$ : l'information de décalage angulaire $\theta_C$ est égale à $\theta_{C,1}$ (calculée par le premier circuit) ;
- si CMDMUX $\theta = 0$ : l'information de décalage angulaire $\theta_C$ est égale à $\theta_{C,2}$ (calculée par le second circuit).

Dans le second circuit de calcul, l'erreur de phase filtrée 46 est fournie à l'accumulateur de phase 44 par l'intermédiaire d'une première bascule 61. Le signal OUVERT qui commande cette première bascule 61 est tel que :
- si OUVERT = 0 : l'erreur de phase filtrée 46 est bloquée,
- si OUVERT = 1 : l'erreur de phase filtrée 46 est fournie à l'accumulateur de phase 44.

L'accumulateur de phase 44 comprend un additionneur 62 en série avec une seconde bascule. Cette seconde bascule 63, commandée par le même signal OUVERT que la première bascule 61, permet de conserver la valeur de l'erreur de phase filtrée pendant une période d'horloge.

La sortie de cette seconde bascule 63 et la sortie de la première bascule 61 constituent les deux entrées de l'additionneur 62 et permettent d'effectuer le cumul des erreurs de phase 46 successives.

L'accumulateur 44 comprend également un second multiplexeur 64 recevant en entrée, d'une part le signal 65 issu de l'additionneur 62 et d'autre part, les éléments binaires de poids fort de la première information de décalage angulaire $\theta_{C,1}$.

Le signal COMMUTC1/C2 qui pilote ce second multiplexeur 64 est tel que:
- si COMMUT C1/C2 = 0 : la seconde bascule 63 reçoit le cumul des erreurs de phase ;
- si COMMUTC1/C2 = 1 : la seconde bascule 63 reçoit les éléments binaires de poids fort de la première information de décalage angulaire $\theta_{C,1}$.

En début de paquet, on utilise le premier circuit de calcul. Par conséquent, on a CMDMUX $\theta$ = 1 et $\theta_C$ = $\theta_{C,1}$. Après une durée correspondant à 17 symboles, on considère que le décalage angulaire $\theta_{C,1}$ est suffisamment proche du décalage angulaire réel pour permettre l'élimination presque totale de la rotation de la constellation : la phase est dite calée.

Après le 17ème symbole, le second circuit de calcul récupère la phase développée par le premier circuit de calcul : la première information de décalage angulaire $\theta_{C,1}$ est injectée dans les éléments binaires de poids fort de l'accumulateur de phase 44 du second circuit de calcul. Cette injection est réalisée en deux étapes:
- dans une première étape, on fait passer les signaux COMMUTC1/C2 puis OUVERT à 1 ;
- dans une deuxième étape, on fait passer les signaux COMMUTC1/C2 puis CMDMUX$\theta$ à 0.

A la fin du paquet, on inhibe le second circuit de calcul en faisant passer le signal OUVERT à 0.

On réitère cette procédure pour chacun des paquets successifs.

Dans le mode de réalisation préférentiel de l'invention, la première 61 et la seconde 63 bascule, l'additionneur 62 et le second multiplexeur 64 travaillent sur 16 éléments binaires, le second multiplexeur 39 travaillant sur 8 éléments binaires. Dans ce mode de réalisation, on injecte les 8 éléments binaires de poids fort de la première information de décalage angulaire $\theta_{C,1}$ dans l'accumulateur de phase 44 (par l'intermédiaire du second multiplexeur 64) au moment de l'instant de commutation, à savoir après le 17ème symbole reçu.

L'intérêt de passer du premier au second circuit de calcul résulte dans le double fait suivant :
- le premier circuit de calcul permet un calage de phase rapide mais présente une sensibilité au bruit ;
- le second circuit de calcul permet un calage de phase présentant une bonne immunité au bruit mais est lent.

Le dispositif selon l'invention permet d'allier les avantages liés à ces deux types de circuit.

Le dispositif décrit ci-dessus est destiné à être mis en oeuvre dans l'étage de démodulation d'un modem AMRT. Toutefois, il est clair que de nombreux autres modes de réalisation de l'invention peuvent être envisagés. On peut notamment prévoir d'utiliser dans le premier circuit de calcul un nombre N de symboles différent de 17. De même, l'invention n'est nullement limitée au cas d'une modulation MDP4.

## Revendications

1. Dispositif de calage de phase destiné à être intégré dans l'étage de démodulation d'un récepteur d'un signal numérique à modulation de phase à au moins deux états de phase, ledit signal étant transmis par paquets successifs, ledit dispositif étant du type comprenant un module de correction (33) assurant la rotation de la constellation des états de phase du signal reçu en fonction d'une information ($\theta_C$) représentative du décalage angulaire de ladite constellation, ledit décalage angulaire correspondant à un décalage de phase, caractérisé en ce qu'il comprend deux circuits distincts de calcul de ladite information ($\theta_C$) représentative du décalage angulaire :
   - un premier circuit de calcul (34) mettant en oeuvre l'algorithme de Viterbi de façon à fournir une première information de décalage angulaire ($\theta_{C,1}$) à partir d'une séquence constituée d'un nombre prédéterminé N de symboles du signal reçu,
   - un second circuit de calcul (41) constitué d'une boucle à verrouillage de phase fournissant une seconde information de décalage angulaire ($\theta_{C,2}$) à partir du signal reçu en continu,

   et en ce que, pour chaque paquet reçu, ladite information ($\theta_C$) représentative du décalage angulaire de la constellation des états de phase est fournie au module de correction (33) par une sortie d'un moyen de commutation (39) recevant en entrée:
   - d'une part ladite première information ($\theta_{C,1}$) de décalage angulaire provenant du premier circuit de calcul (34),
   - d'autre part ladite seconde information ($\theta_{C,2}$) de décalage angulaire provenant du second circuit de calcul (41),

   ledit moyen de commutation (39) étant commandé par un circuit de temporisation de façon que ladite sortie du moyen de commutation (39) fournisse d'abord, pendant une durée prédéterminée, ladite première information ($\theta_{C,1}$), puis, à un instant de commutation correspondant à la fin de ladite durée prédéterminée, ladite seconde information ($\theta_{C,2}$),

   ledit second circuit de calcul (41) étant initialisé avec ladite première information ($\theta_{C,1}$) de décalage angulaire au moment dudit instant de commutation.

**2.** Dispositif selon la revendication 1, caractérisé en ce que ladite boucle à verrouillage de phase du second circuit de calcul (41) comprend :
- un détecteur d'erreur de phase (42) ;
- un filtre passe-bas du second ordre (43) ;
- un accumulateur de phase (44).

**3.** Dispositif selon l'une quelconque des revendications 1 et 2, caractérisé en ce que ladite démodulation de phase du signal reçu est une démodulation cohérente.

**4.** Dispositif selon l'une quelconque des revendications 1 à 3, caractérisé en ce que ladite démodulation de phase est une démodulation à quatre états de phase.

**5.** Dispositif selon l'une quelconque des revendications 1 à 4, caractérisé en ce que lesdits paquets successifs sont regroupés en trames AMRT (Accès Multiple par Répartition dans le Temps), chacun desdits paquets commençant par un préambule constitué d'une séquence comprenant un nombre prédéterminé M de symboles, ladite durée prédéterminée précédant l'instant de commutation étant inférieure à la durée de réception dudit préambule.

**6.** Dispositif selon l'une quelconque des revendicatios 1 à 5, caractérisé en ce que ledit nombre prédéterminé N de symboles du signal reçu utilisés lors de l'exécution de l'algorithme de Viterbi est N = 17 symboles.

**7.** Dispositif selon l'une quelconque des revendications 1 à 6, caractérisé en ce que les différents jeux de valeurs quantifiées utilisés par le module de correction (33) pour effectuer ladite rotation de la constellation des états de phase sont stockés dans une mémoire morte (311) externe audit module de correction (33), chacun desdits jeux de valeurs quantifiées correspondant à une valeur distincte de décalage angulaire ($\theta_C$).

**8.** Dispositif selon l'une quelconque des revendications 1 à 7, caractérisé en ce que ladite initialisation du second circuit de calcul (41) au moment dudit instant de commutation consiste à injecter ladite première information de décalage angulaire ($\theta_{C,1}$) dans les éléments binaires de poids fort de l'accumulateur de phase (44) du second circuit de calcul (41).

**9.** Récepteur d'un signal numérique à modulation de phase à au moins deux états de phase, ledit signal étant transmis par paquets successifs, ledit récepteur étant du type comprenant un étage de démodulation composé de :

- un filtre passe-bande (229) en fréquence intermédiaire ;
- un oscillateur local (21);
- un module de multiplication (26, 27) du signal reçu filtré (230), d'une part par le signal (22) fourni par ledit oscillateur local (21), et d'autre part par un signal (25) en quadrature de phase avec ledit signal (22) fourni par l'oscillateur local (21), les deux signaux (28, 29) résultant desdites multiplications correspondant aux deux composantes en quadrature de phase l'une par rapport à l'autre du signal reçu (23);
- deux filtres passe-bas anti-repliement (210, 211) ;
- deux convertisseurs analogique/numérique (214, 215) permettant chacun de convertir en numérique une desdites composantes filtrées en quadrature (212, 213) ;
- deux filtres passe-bas (218, 219) en racine de Nyquist ;
- un module de récupération de rythme (222) à partir des composantes filtrées en quadrature (220, 221), la sortie (223) dudit module de récupération de rythme (222) commandant lesdits convertisseurs analogique/numérique (214, 215) ;
- un dispositif de calage de phase (224) selon l'une quelconque des revendications 1 à 8 assurant la rotation de la constellation des états de phase correspondant aux différents couples de composantes numériques filtrées en quadrature (220, 221) ;
- un module de décision (227) permettant d'associer un symbole à chaque couple de composantes en quadrature calées en phase (225, 226) ;
- un dispositif de levée d'ambiguïté (231) permettant de remplacer le symbole, issu de la décision prise par le module de décision (227), par un symbole correct.

Fig. 1A

Fig. 1B

Fig. 2

## Fig. 3

## Fig. 4

Fig. 5

Fig. 6

Office européen
des brevets

**RAPPORT DE RECHERCHE EUROPEENNE**

Numero de la demande

EP 94 40 0013

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.5) |
|---|---|---|---|
| A | US-A-4 466 108 (RHODES)<br>* abrégé; figures 1,2 *<br>* colonne 2, ligne 64 - colonne 3, ligne 8 *<br>* colonne 5, ligne 44 - colonne 6, ligne 58 *<br>* colonne 16, ligne 44 - colonne 17, ligne 3 * | 1,3-7,9 | H04L27/22 |
| A | IEEE TRANSACTIONS ON INFORMATION THEORY, vol.29, no.4, Juillet 1983, NEW YORK, US pages 543 - 551<br>VITERBI & VITERBI 'Nonlinear estimation of PSK - modulated carrier phase with application to burst digital transmission'<br>* abrégé; figure 2 *<br>* page 544, alinéa 4 * | 1,4,5,9 | |
| A | IEEE International Telecommunications Symposium, 1990; Rio de Janeiro, BR, 3 - 6 Sept. 1990; IEEE, New York, US, 1990; pages 535 - 540, Sampio - Neto & Alburquerque: 'Carrier recovery performance in PSK systems using transmission pulses with a square root raised cosine spectrum'<br>* figures 1,2 * | 1,2,9 | **DOMAINES TECHNIQUES RECHERCHES (Int.Cl.5)**<br><br>H04L |
| A | ALTA FREQUENZA,<br>vol.57, no.10, Décembre 1988, MILANO IT pages 67 - 73<br>D'ANDREA ET AL. 'Carrier phase recovery for narrow - band polyphase shift keyes signals'<br>* figures 2,4,5 * | 1,9 | |

Le présent rapport a été établi pour toutes les revendications

| Lieu de la recherche | Date d'achèvement de la recherche | Examinateur |
|---|---|---|
| LA HAYE | 26 Avril 1994 | Scriven, P |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)